Europäisches Patentamt

(19) European Patent Office

Office européen des brevets

(11) Veröffentlichungsnummer: **0 054 175**
A1

(12) # EUROPÄISCHE PATENTANMELDUNG

(21) Anmeldenummer: 81109353.3

(22) Anmeldetag: 30.10.81

(51) Int. Cl.³: **C 04 B 13/24**
C 04 B 7/35, C 04 B 7/353
C 04 B 11/24

(30) Priorität: 11.12.80 DE 3046585

(43) Veröffentlichungstag der Anmeldung:
23.06.82 Patentblatt 82/25

(84) Benannte Vertragsstaaten:
AT BE CH DE FR GB IT LI LU NL SE

(71) Anmelder: Henkel Kommanditgesellschaft auf Aktien
Postfach 1100 Henkelstrasse 67
D-4000 Düsseldorf 1(DE)

(72) Erfinder: Ziche, Horst
Am Falder 20
D-4000 Düsseldorf 13(DE)

(72) Erfinder: Schweizer, Dieter, Dr.
Achenbachstrasse 7
D-4000 Düsseldorf 1(DE)

(54) Mörtelmischungen und deren Verwendung.

(57) Der noch wasserfreien Mörtelmischung auf Basis von Zement, Gips und/oder Kalkhydrat sowie üblichen Füll- und Hilfsstoffen sind 0,05-0,5 Gewichtsteile wasserlösliche nichtionogene Celluloseether sowie 0,01-0,05 Gewichtsteile Ethylenoxidaddukte an Fettalkohole und/oder Fettsäuren oder deren Amide zugesetzt. Der Fettrest enthält 10-22 (12-18) C-Atome und die Polyglykolethergruppe 20-60 (25-50) Glykolreste.

Verwendung finden diese Mischungen zur Herstellung von Luftporen enthaltenden Putzen, Haftputz auf Basis von Gips und Kalkhydrat sowie Zementgrundputz auf Basis von Portland-Zement.

EP 0 054 175 A1

Croydon Printing Company Ltd.

Henkelstraße 67
4000 Düsseldorf, den 9. Dezember 1980

0054175
HENKEL KGaA
ZR-FE/Patente

Dr. SchOe/Ge

Patentanmeldung
<u>D 6258</u> EP

"Mörtelmischungen und deren Verwendung"

Mörtelmischungen auf Basis von Zement, Gips und/oder Kalkhydrat sind seit langem bekannt. Ebenso ist es bekannt, derartigen Mörtelmischungen die verschiedensten Hilfsstoffe wie Füllstoffe, Pigmente, weitere Verarbeitungshilfsmittel zuzusetzen. Insbesondere ist die Verwendung von löslichen nichtionogenen Celluloseethern in der Praxis vielfach üblich. Auch der Zusatz von bekannten Netzmitteln sowohl anionenaktiven als auch nichtionogenen ist bekannt.

Diese Zusätze dienen unter anderem dazu, Luftporen einzubringen und so die Verarbeitung der Mörtelmischungen zu verbessern. Jedoch sind die Ergebnisse nicht in allen Fällen zufriedenstellend. Unter Umständen wird auch durch einen zu hohen Gehalt an Netzmitteln die Verarbeitung erschwert.

Unter anderem kann einerseits der Zusatz von Methylcellulose bei längerem Rühren zu einer Steigerung des Luftporengehalts führen, andererseits aber zu unerwünschter Klebrigkeit, die sich bei der Verarbeitung unangenehm bemerkbar macht. Der Putz ist nur schwer zu verarbeiten. Desgleichen können durch die Methylcellulose andere physikalische Eigenschaften verschlechtert werden, die letztlich zum Ausreißen oder Rollen der Putzober-

...

fläche führen. Diese Nachteile verteuern die Verarbeitung des Putzes, da die Putzfläche mehr Zeit benötigt, um in den gewünschten Endzustand gebracht zu werden.

Aufgabe der vorliegenden Erfindung war es daher, solche hydraulischen Mörtel auf Basis von Gips und/oder Zement und/oder Kalkhydrat sowie üblichen Füll- und Hilfsstoffen zu finden, die die aufgezeigten Mängel nicht haben. Insbesondere sollte ein Weg gefunden werden, um in kurzer Zeit zu einem bestimmten und reproduzierbaren Gehalt an Luftporen in hydraulischen Mörteln zu gelangen.

Der erfindungsgemäße Mörtel ist dadurch gekennzeichnet, daß man auf 100 Gewichtsteile der noch wasserfreien Mörtelmischung 0,05 bis 0,5 Gewichtsteile wasserlösliche nichtionogene Celluloseether sowie 0,01 bis 0,05 Gewichtsteile Ethylenoxidaddukte an Fettalkohole oder Fettsäuren oder deren Amide einsetzt, wobei der Fettrest 10 bis 22 C-Atome und der Polyglycoletherrest 20 bis 60 Glycolethergruppen aufweist. Es hat sich als zweckmäßig erwiesen, solche Addukte zu verwenden, in denen der Fettrest 12 bis 18 C-Atome enthält und die Polyglycolethergruppierung 25 bis 50 Glycolethergruppen aufweist. Der Fettrest kann aus natürlichem oder synthetischem Material stammen. Er kann auch Doppelbindungen oder OH-Gruppen enthalten. Bei der Anlagerung von Ethylenoxid kann in an sich bekannter Weise in untergeordneter Menge auch Propylenoxid (bis zu etwa 15 % des Gesamtalkylenoxids) mitverwendet werden. Die Korngröße der wasserlöslichen Ethylenoxidaddukte soll etwa zwischen 100 und 500 µ liegen.

. . .

Die nichtionogenen Celluloseether sind im Entwurf für
DIN 55 952 definiert. Demnach sind darunter sowohl
kaltwasserlösliche Celluloseether wie Methylcellulose
als auch weitere Ethergruppen (Hydroxypropyl-, Hydroxyethyl) enthaltende Methylcellulosesorten und auch
Ethylhydroxyethylcellulose zu verstehen. Brauchbar
sind auch die sowohl in heißem als auch in kaltem Wasser
löslichen Sorten wie Hydroxyethylcellulose. Ferner fallen
unter den Begriff nichtionogene Celluloseether auch Methylcarboxymethylcellulosen, sofern der nichtionogene
Charakter überwiegt.

Zweckmäßig werden die festen Komponenten vor dem Anrühren
mit Wasser trocken gemischt und später in das Wasser
eingetragen. Natürlich ist es auch möglich, nur bestimmte
Materialien wie nichtionogene Celluloseether und Ethylenoxidaddukte vorher zu mischen - etwa gemeinsam mit
inerten Zusätzen wie Pigmenten oder Perlit - und
dann die weiteren notwendigen Komponenten zuzusetzen.

Die Kombination der Zusätze bringt im Gegensatz zu
der bisher allein geübten Verwendung von für diese Zwecke
bekannten hauptsächlich anionaktiven Netzmitteln und
Methylcellulose auch Vorteile hinsichtlich der Verarbeitung während der gesamten Arbeitsdauer sowie auch
eine Erleichterung der Nacharbeitung wie das Filzen
und Glätten.

Verwendung können die erfindungsgemäßen Mörtelmischungen
finden für die Handverarbeitung sowie für Putzmaschinen
zur Herstellung von Haft-, Fertig- und Maschinenputz
auf Gips/Kalk-Basis. Sie sind brauchbar für ein- und
mehrlagige Putzmassen auf Zementbasis. Ferner können
sie vorteilhaft für Bau- und Fliesenkleber zum Verlegen
von Fliesen und Mosaik eingesetzt werden. Schließlich
sind sie als Mauermörtel geeignet.

...

0054175
HENKEL KGaA
ZR-FE/Patente

In allen Fällen haben die Mörtel beziehungsweise die erhärteten Mörtelmassen einen gewünschten und reproduzierbaren Gehalt an Luftporen.

## Beispiele

Es wurden in einem handelsüblichen Zwangsmischer
(System Hobart) jeweils die weiter unten angegebenen
Bestandteile gemischt. Zur eigentlichen Anwendung wurde
jeweils die notwendige Menge Wasser eingerührt.

1) Haftputz

| 910 | g Stuckgips |
| 50 | g Kalkhydrat |
| 40 | g Perlite |
| 3 | g Methylcellulose (3 000 mPa·s; 2 % Brookfield bei 20° C) |
| 0,2 | g Addukt von 30 Mol Ethylenoxid an 1 Mol Fettalkohol ($C_{16}/C_{18}$) |
| 0,2 | g Weinsäure |

Wasserzusatz:     600 ml

| Mischzeit in Min. | Luftporengehalt |
|---|---|
| 1' | 11 % |
| 3' | 13 % |
| 5' | 14 % |
| 10' | 14 % |

Vergleichsversuch:

Wurde das Ethylenoxidaddukt durch ein handelsübliches
anionenaktives Netzmittel bei gleichem Wasserzusatz
ersetzt, ergaben sich folgende Werte:

| Mischzeit in Min. | Luftporengehalt |
|---|---|
| 1' | 20 % |
| 3' | 23 % |
| 5' | 25 % |
| 10' | 32 % |

2) <u>Gipsmaschinenputzmörtel</u>

| | | |
|---|---|---|
| 500 | g | Stuckgips |
| 450 | g | Hochbrandgips |
| 50 | g | Kalkhydrat |
| 2,2 | g | Methylcellulose (7 000 mPa·s; 2 %ig Brookfield bei 20° C) |
| 0,2 | g | Addukt von 50 Mol Ethylenoxid an 1 Mol Talgalkohol |
| 0,5 | g | Weinsäure |

Wasserzusatz:     550 ml

Mischzeit:        0,5 Min.

Luftporengehalt:  9 %

3) <u>Zementgrundputz</u>

| | | |
|---|---|---|
| 120 | g | Zement PZ 350 F |
| 100 | g | Kalkhydrat |
| 760 | g | Kalksteinsand (1,2 mm) |
| 10 | g | Perlite |
| 0,5 | g | Methylcellulose (1 500 mPa·s; 2 %ig Brookfield bei 20° C) |
| 0,15 | g | Addukt von 30 Mol Ethylenoxid an 1 Mol Stearinsäure (techn.) |

Wasserzusatz:     300 ml

Mischzeit:        3 Min.

Luftporengehalt:  12 %

. . .

**0054175**
HENKEL KGaA
ZR-FE/Patente

## Patentansprüche

1) Mörtelmischungen auf Basis von Zement, Gips und/oder Kalkhydrat sowie üblichen Füll- und Hilfsstoffen, dadurch gekennzeichnet, daß man auf 100 Gewichtsteile der noch wasserfreien Mörtelmischung 0,05 bis 0,5 Gewichtsteile wasserlösliche nichtionogene Celluloseether sowie 0,01 bis 0,05 Gewichtsteile Ethylenoxidaddukte an Fettalkohole und/oder Fettsäuren oder deren Amide einsetzt, wobei der Fettrest 10 bis 22 C-Atome und die Polyglycolethergruppe 20 bis 60 Glycoletherreste aufweist.

2) Hydraulischer Mörtel nach Anspruch 1, dadurch gekennzeichnet, daß der Fettrest 12 bis 18 C-Atome enthält, und die Polyglycolethergruppe 25 bis 50 Glycolreste aufweist.

3) Verwendung der Mörtelmischungen nach Ansprüchen 1 und 2 auf Putzmaschinen zur Herstellung von Luftporen enthaltenden Putzen.

4) Verwendung der Mörtelmischungen nach Ansprüchen 1 und 2 zur Herstellung von Luftporen enthaltendem Haftputz auf Basis von Gips und Kalkhydrat sowie zur Herstellung von Luftporen enthaltendem Zementgrundputz auf Basis von Portland-Zement.

## 0054175

Nummer der Anmeldung

EP 81 10 9353.3

Europäisches Patentamt

EUROPÄISCHER RECHERCHENBERICHT

| | EINSCHLÄGIGE DOKUMENTE | | KLASSIFIKATION DER ANMELDUNG (Int Cl³) |
|---|---|---|---|
| Kategorie | Kennzeichnung des Dokuments mit Angabe, soweit erforderlich, der maßgeblichen Teile | betrifft Anspruch | |
| X | EP - A1 - 0 008 094 (HOECHST AG)<br><br>* Ansprüche 1, 3, 5, 7, 8; Seite 16, Beispiel V3; Seite 18, Beispiel 11 *<br><br>-- | 1,2,4 | C 04 B 13/24<br>C 04 B 7/35<br>C 04 B 7/353<br>C 04 B 11/24 |
| A | DE - A1 - 2 751 764 (W.R. GRACE & CO.)<br><br>* Ansprüche 1, 11, 12, 19; Seite 21, Zeilen 11 bis 21 *<br><br>-- | 1,2 | |
| A | DE - A - 1 671 279 (WACKER-CHEMIE GMBH)<br><br>* Ansprüche 1 bis 4; Seite 6, Zeile 1 bis Seite 7, Zeile 13 *<br><br>-- | 1,2 | **RECHERCHIERTE SACHGEBIETE (Int Cl³)** |
| A | DE - A - 2 319 707 (TILLING CONSTRUCTION SERVICES LTD.)<br><br>* Ansprüche 1, 2, 9 bis 11 *<br><br>---- | 1,2 | C 04 B 7/00<br>C 04 B 11/00<br>C 04 B 13/00<br>C 04 B 25/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| ☒ | Der vorliegende Recherchenbericht wurde für alle Patentansprüche erstellt. |
|---|---|

| Recherchenort | Abschlußdatum der Recherche | Prüfer |
|---|---|---|
| Berlin | 26-02-1982 | BERTRAM |

EPA form 1503.1 06.78